# EUROPEAN PATENT SPECIFICATION

(11) **EP 1 814 341 B1**
(45) Date of publication and mention of the grant of the patent: **29.04.2009**
(21) Application number: 07101205.8
(22) Date of filing: 25.01.2007
(51) Int. Cl.: H04W 52/04

(54) **Methods and devices for transmitting and receiving frame timings and frame numbers via common radio interface**
Verfahren und Vorrichtungen zum Senden und Empfangen von Rahmenzeiten und Rahmenzahlen über eine gemeinsame Funkschnittstelle
Procédés et dispositifs de transmission et de réception de rythmes de trame et de numéros de trame via une interface radio commune

(30) Priority: 26.01.2006 CN 200610023652
(43) Date of publication of application: 01.08.2007
(73) Proprietor: Huawei Technologies Co., Ltd., Longgang District Shenzhen 518129 (CN)
(72) Inventor: Xia, Yingjiu Huawei Administration Building, 518129, Shenzhen (CN); Yang, Ganghua Huawei Administration Building, 518129, Shenzhen (CN)
(74) Representative: Viering, Hans-Martin

(56) References cited:
- WO-A-20/05029713
- US-A1- 2005 105 534
- US-A1- 2005 105 552
- "CPRI Specification V2.0 (2004-10-01)" INTERNET CITATION, [Online] 1 October 2004 (2004-10-01), XP002359217 Retrieved from the Internet: URL:http://www.cpri.online/> [retrieved on 2005-12-15]
- OBSAI: "Reference Point 3 Specification Version 1.0" OBSAI SPECIFICATION, 5 February 2004 (2004-02-05), pages 1-72, XP002991635

## Description

This application claims the priority of Chinese patent application No. 200610023652.2 filed with the Chinese Patent Office on January 26, 2006, entitled "METHOD FOR TRANSMITTING FRAME TIMINGS AND FRAME NUMBERS VIA COMMON RADIO INTERFACE", contents of which are incorporated hereby by reference in its entirety.

### Field of the Invention

The present invention relates to the field of mobile communication technologies, and in particular to methods and devices for transmitting and receiving frame timings and frame numbers via a common radio interface.

### Background of the Invention

The Common Public Radio Interface (CPRI) specification is proposed by several companies in the industry with respect to a crucial interface internal to a radio base station for mobile communications. This CPRI specification is common to the industry in connection with the crucial interface, and provides a set of common standards for the crucial interface internal to the base station. It is in the CPRI specification that a crucial internal interface for the radio base station between a Radio Equipment Controller (REC) and a Radio Equipment (RE) is defined. Such standards have been established for the purpose of creating an open market orientated to cellular base stations, and thereby greatly reducing enormous development labors and high costs conventionally concomitant throughout the design of a base station.

Collaborations in the CPRI industry are focused on the design of base stations for a 3^{rd} Generation (3G) mobile communication system, in which a radio base station is divided into a radio part and a control part, such that both parts may benefit more from technical advancements in their respective fields.

To benefit the entire radio industry, the CPRI specification may be available publicly. Crucial benefits to a network operator are availability of more abundant series of radio base station products and adaptation to various network deployment plans in a shorter period for introduction into the market. In addition, the CPRI specification enables base station manufacturers and component providers to focus on research and development activities relevant to their core competitiveness. The CPRI specification is also available to a new architecture and is not limited to the scale of module or predefined function allocation.

The collaborations in the CPRI industry enable the base station manufacturers to focus on the research and development of their core technical capabilities and to implement interconnections among equipment manufactured by various manufacturers. Primary benefits from the specification are more rapid advancement of a newly introduced technology, provision of more abundant series of products for the base station manufacturers and a shorter period for introduction of a product into the market. In addition, the operators may benefit from wider product options, more flexible solutions and an improved efficiency of network deployments.

The initiator of the CPRI specification initiated a competitive industry of mobile network components, and enabled the entire radio industry to benefit from the opening of CPRI REC-RE interfaces. The CPRI specification is complementary to existing standardization organizations, such as the 3^{rd} Generation Partnership Project (3GPP), and common interfaces developed under the specification can be applied to radio base station products of a mobile system.

For a 3G mobile communication system, such as a Wideband Code Division Multiple Access (WCDMA) system, the CPRI specification may be adapted to implement a Layer 1 (L1) or Layer 2 (L2) communication protocol between a baseband control unit and a radio frequency unit. The CPRI specification can enhance universality of an interface between the baseband control unit and the radio frequency unit and may be advantageous to interconnection between baseband and radio frequency modules from various manufacturers.

Subsequent to the successful introduction of the CPRI specification, a problem in urgent need of being addressed currently is how to adapt the system architecture and the networking approach for a 3G radio base station. For a common interface between baseband and radio frequency, both system architecture and networking approach need to be proposed accordingly for full use of its advantages. In addition, a solution for network transmission reliability needs to be provided in terms of the system architecture, such that integrity, compatibility and reliability of a base station system can be guaranteed in the case of the common interface architecture and based on the cooperation among equipment from various manufacturers.

As can be seen from the development of the 2^{nd} generation Global System of Mobile Communication (GSM) and the WCDMA, a base station experiences an update every four to five years. Thanks additionally to rapid advancements of computing and microelectronic technologies, mobile communication technologies will be updated more rapidly. In the evolution at each stage, various Radio Access Technologies (RATs) emerge constantly and exist concurrently, such as GSM of the 2^{nd} generation, WCDMA, CDMA2000, Time Division-Synchronous Code Division Multiple Access (TS-CDMA) of the 3^{rd} generation, 802.16e of the Institute of Electrical and Electronic Engineers (IEEE), etc. As a common radio interface in the industry, the CPRI must be adapted to a common transmission for various RATs, thus embodying a so-called common interface.

Radio frame timings and radio frame numbers for different RATs in different stages have been organized differently A radio frame timing refers to an indicative signal that identifies the start of a period of a radio frame from a radio base station. Different frame periods are defined for different RATs, for instance, a frame period of 10 ms for WCDMA R6 and earlier versions, a frame period of 60/13 ms for GSM, and numerous options including 2 ms, 5 ms or the like of a frame period for 802.16e, etc. A radio frame number refers to a serial number of a radio frame. Different RATs are enabled with different methods for indication of a radio frame number and thus with different numbers of binary bits; for instance, a 12-bit radio frame number for WCDMA R6 and earlier versions, and a more complex radio frame number for GSM.

As a standard for the common interface between an REC and an RE, the CPRI specification serves to provide a method for transmitting radio frames. The latest version of the CPRI specification V2.0 was designed for WCDMA R5 and earlier standards, and hence is not suitable for other RATs, such as IEEE 802.16e, GSM, etc, even possibly nor for subsequent versions of WCDMA, such as WCDMA R7, etc. For adaptation to technology advancements in the mobile communication industry, a common radio interface is needed urgently for convenient and efficient transmission of frame timings and frame numbers for different RATs.

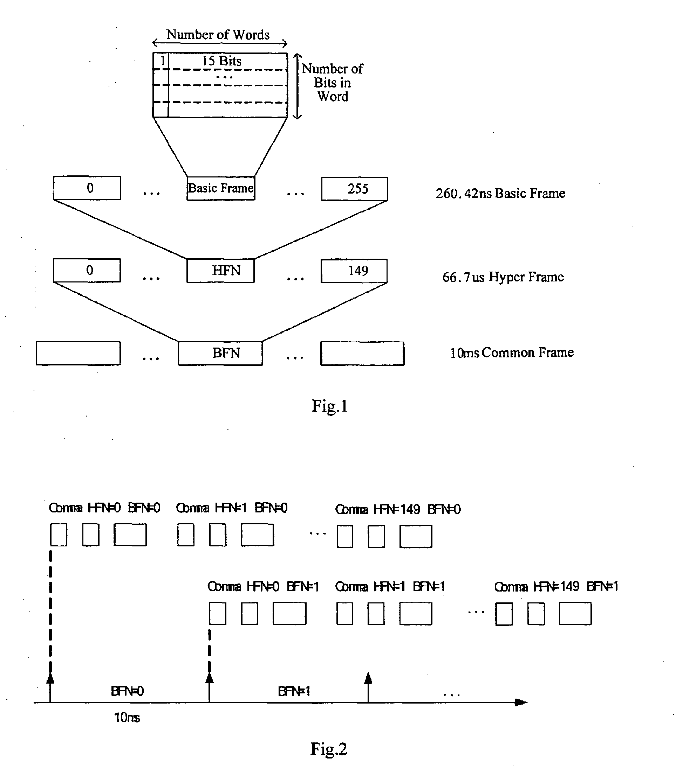

A structure of a CPRI frame in CPRI V2.0 of the prior art is illustrated in Fig.1. A 10-ms WCDMA radio frame includes 150 hyper frames each with a period of 1/15 ms, and each hyper frame includes 256 basic frames each with a period of 1/3.84 µs. In a control word of each hyper frame, there are 8 bits indicating a current Hyper Frame Number (HFN), and 16 bits indicating a current Node B Frame Number (BFN).

In CPRI V2.0, the start of a hyper frame as indicated by HFN=0 is referred to as a comma, i.e. a sync byte K28.5 in the CPRI standard, which is used to indicate the start of a WCDMA radio frame period. A frame number of a radio frame is indicated by the BFN in the control word. Contents in the control word field where the BFN is located are left unchanged throughout the 150 hyper frames in a 10-ms WCDMA radio frame. Fig.2 illustrates a structure for transmission of WCDMA radio frames in CPRI V2.0.

In a practical application, the above solution is disadvantageous in that the solution for transmitting radio frame timings and radio frame numbers are merely suitable for transmission of a radio frame number ranging from 0 to 4095 of a WCDMA frame with a 10-ms period but not for transmission of radio frame timings and radio frame numbers for such an RAT as 802.16e, GSM, etc. A reason for this is that frame timings, frame interfaces and frame lengths for different RATs vary greatly, while neither a current CPRI nor another radio interface is capable of transmitting frame timings and frame numbers for different RATs due to the simple and fixed frame structure control word available to current CPRI versions or other radio interfaces, which are thus only capable of transmitting radio frames with a fixed frame length for a single RAT.

The International Patent Application published as WO 2005/029713 A discloses a device for a radio station through which data of at least two different radio standards can be transmitted from respective baseband processors to at least one transmitting unit via a single data line.

The US Patent Applications published as US 2005/105534 A1 and US 2005/105552 A1, respectively, relate to an internal interface (such as the Common Public Radio Interface) of a radio base station which links a radio equipment portion of the radio base station to a radio equipment control portion of the base station.

### Summary of the Invention

Embodiments of the invention provide methods and devices for transmitting and receiving frame timings and frame numbers via a common radio interface, thereby radio frame timings and frame numbers for different RATs can be transmitted and received via the common radio interface.

To this end, an embodiment of the invention provides a method for transmitting frame timings and frame numbers via a common radio interface, which may include:

determining, in accordance with a common multiple relationship between a length of common frame and a length of frame to be transmitted, a common multiple period so as to be equal to an integer C2 times the length of common frame and to an integer C1 times the length of frame to be transmitted;

bearing C1 frames to be transmitted in C2 consecutive common frames for transmission in each common multiple period; and

transmitting valid information on frame timings and frame numbers in a first common frame of each common multiple period.

Another embodiment provides a method for receiving frame timings and frame numbers via a common radio interface, comprising:

obtaining a type of a current received frame in accordance with a frame-type control word;

recovering information on frame timings in accordance with a frame-timing validity indication bit for every common multiple period equal to an integer C2 times a length of common frame and to an integer C1 times a length of the current received frame; and

recovering information on frame timing and frame number for every C1-th received frame in accordance with a frame-number control word for every common multiple period, and obtaining information on frame timings and frame numbers of other received frames through symbol counting.

Another embodiment of the invention provides a device for transmitting frame timing and frame number via a common radio interface, which may include:

a determining unit adapted to determine a common multiple period for frame to be transmitted with the use of a common multiple relationship between a length of frame to be transmitted and a length of common frame, so that there are exactly C1 frames to be transmitted, where C1 is an integer, or C2 common frames, where C2 is an integer, in each common multiple period for frame to be transmitted;

a configuring unit coupled with the determining unit and adapted to configure, in each common multiple period for frame to be transmitted, C1 frames to be transmitted borne in C2 consecutive common frames for transmission;

] a transmitting unit coupled with the configuring unit and adapted to transmit valid information on frame timings and frame numbers in a first common frame of each common multiple period.

Another embodiment provides a device for receiving frame timings and frame numbers via a common radio interface, comprising:

an obtaining and recovering unit adapted to obtain a type of a current received frame from a received frame-type control field, to recover information on frame timings from an frame-timing validity indication bit for every common multiple period equal to an integer C2 times a length of common frame and to an integer C1 times a length of the current received frame, to recover information on frame timing and frame number for every C1-th received frame from a frame-number control word for every common multiple period, and to obtain information on frame timings and frame numbers of other received frames through symbol counting.

In the embodiments of the invention, a uniform CPRI frame of 10 ms, also referred to as a common frame, may be used for transmitting radio frames for different RATs with different frame lengths, and in accordance with a least common multiple relationship between a radio frame length and a CPRI common frame length, a number of consecutive CPRI common frame periods (the number is assumed to be C2) may be selected to bear an integer number of radio frames (the number is assumed to be C1), for transmission in unit of the common multiple. The radio frame number may be incremented by C1 upon each transmission in order for correct transmission of the radio frame numbers. Thus, determination of values of C2 and Cl can enable a uniform transmission of the radio frames with different lengths. That is, the transmissions may be combined based upon the common multiple relationship between a radio frame length and a CPRI common frame length so as to enable uniform bearing of different frame lengths for different RATs, thus ensuring a high efficiency of the uniform transmission for the RATs and saving bandwidth resources of an interface.

### Brief Description of the Drawings

Fig. 1 is a schematic diagram of a frame structure in CPRI V2.0 of the prior art;

Fig.2 is a schematic diagram of a structure for transmission of WCDMA radio frames in CPRI V2.0 of the prior art;

Fig.3 is a flow chart of transmitting frame timings and frame numbers via a common radio interface in a method according to a first embodiment of the invention;

Fig.4 is a schematic diagram of a sender REC transmitting radio frame timings and frame numbers in a method according to a second embodiment of the invention;

Fig.5 is a schematic diagram of a receiver RE recovering radio frame timings and frame numbers in the method according to the second embodiment of the invention; and

Fig.6 is a schematic diagram of a device for transmitting and a device for receiving frame timings and frame numbers via a common radio interface according to an embodiment of the invention.

### Detailed Description of the Embodiments

The invention will be further described with reference to the drawings and embodiments thereof.

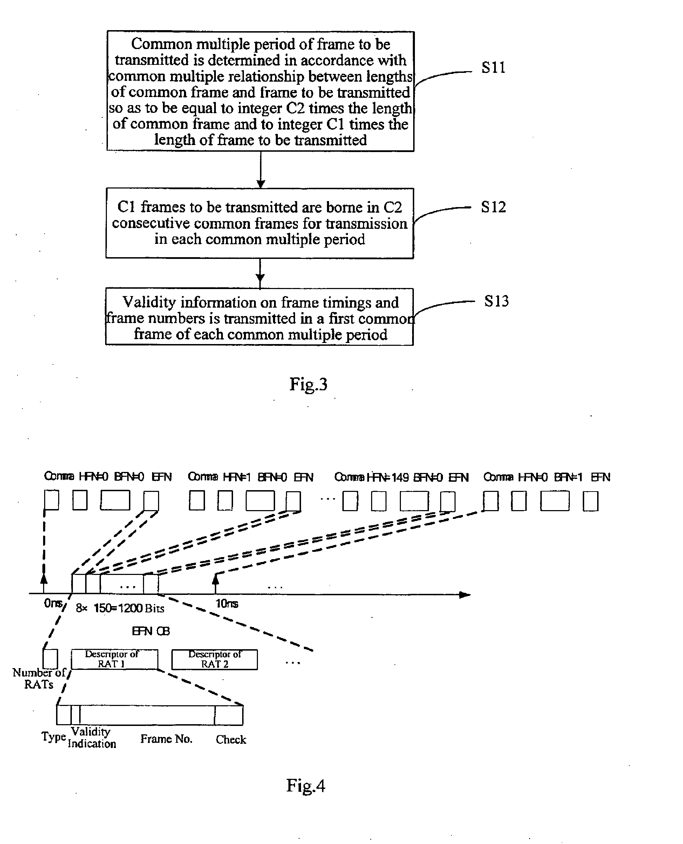

Fig.3 illustrates a flow chart of transmitting frame timings and frame numbers via a common radio interface in a method according to an embodiment of the invention, which includes the following steps.

In step S11, a common multiple period is determined in accordance with a common multiple relationship between a length of common frame and a length of frame to be transmitted so as to be equal to an integer C2 times the length of common frame and to an integer C1 times the length of frame to be transmitted.

In step S12, C1 frames to be transmitted are borne in C2 consecutive common frames for transmission in each common multiple period.

In step S13, validity information on frame timings and frame numbers is transmitted in a first common frame of each common multiple period.

According to the embodiment of the invention, a common frame includes 150 hyper frames with a total of 10 ms, as in CPRI V2.0. Then an 8-bit control word of Extension Frame Number (EFN) is configured in each hyper frame, and the EFNs of the 150 hyper frames compose EFN Combination Bits (EFN CB). The 1200 bits for the EFN CB are divided into RAT descriptors for respective RATs, which describe transmission information of radio frames for corresponding RATs, including frame-type control words, frame-timing validity indication bits, frame-number control words, Cyclic Redundancy Check (CRC) fields, etc.

The embodiments of the invention are directed mainly to upgrading an existing CPRI common radio interface so that radio frames with different lengths may be transmitted with an existing CPRI REC-RE interface mechanism. This idea is also applicable to other interfaces besides a CPRI REC-RE interface. For an implementation over the CPRI REC-RE interface, how to construct a common frame, to configure control fields required for transmission of frame timings and frame numbers, and to divide and combine such control fields will be addressed according to the embodiments of the invention.

Furthermore, the embodiments of the invention can allocate and use the control fields, and configure, in the control fields of a common frame, frame-type control words for indication of the types of different frames to be transmitted, frame-timing validity indication bits for indication of whether frame timing signals are valid or not, and frame-number control words for transmission of information on radio frame numbers.

For ease of understanding by those skilled in the art, the embodiments of the invention will be described in detail hereinafter in view of their implementations including: an implementation in which with the use of a common multiple relationship between a radio frame period for a certain RAT and a 10-ms CPRI frame period (C1 and C2), a radio frame number incremented by C1 is transmitted every C2 CPRI common frame periods; an implementation in which with the use of information on Comma, HFN, etc., radio frame timing and radio frame number are transmitted, and then recovered at an opposite end; an implementation in which among the CPRI control words, a dedicated control word is defined for transmission of radio frame timing and radio frame number; an implementation in which control words, which are for transmission of radio frame timing and radio frame number, in the 150 hyper frames of the 10-ms CPRI frame are combined for transmission of radio frame timing and radio frame number for a plurality of RATs; an implementation of dividing the EFN CB for transmission of radio frame timings and radio frame numbers for the plurality of RATs, etc.

In a first embodiment of the invention, a common radio interface may be provided for transmission of frame timings and frame numbers of frames with different lengths. A specific implementation thereof will be described hereinafter. First, a common multiple period equal to an integer C2 times the length of common frame and to an integer C1 times the length of frame to be transmitted is determined in accordance with a least common multiple relationship between a length of common frame and a length of frame to be transmitted. For instance in the case that the length of common frame is 2 ms, and the length of frame to be transmitted is 5 ms, then the least common multiple period is 10 ms, where C2=5 and C1=2. Then, C1 frames to be transmitted are borne in C2 consecutive common frames for transmission in each common multiple period. Additionally, information on frame timings and frame numbers is transmitted in a first common frame of each common multiple period. In this regard, the radio frame numbers may be transmitted directly in an explicit way, and the radio frame timings may be represented through combination of respective information on whether the common frame timings, the radio frame numbers and the radio frames are valid.

According to this embodiment, in order for a receiver to receive various radio frames for different RATs in accordance with frame type, further configured in a common frame may be a frame-type control word for indication of a type of a current frame to be transmitted.

For the implementation of frame timings, frame-timing validity indication bits may be configured in a common frame, wherein the frame-timing validity indication bits may be set in a first common frame of each common multiple period so as to indicate timing information of the common frame is valid. In accordance with such information, the receiver may obtain frame synchronization information of the common multiple period, and further obtain frame timing information of each radio frame through any alternative method.

In the implementation of frame timings, frame number information should be transmitted properly through filling the frame number information of frames to be transmitted in a first common frame of each common multiple period. Since the number of frames to be transmitted actually in each common multiple period is C1, the frame number of frame to be transmitted shall be incremented by C1 every common multiple period. That is, if a frame number of a current frame to be transmitted is n, n+C1 should be filled in the first common frame of a next common multiple period.

In the case that the receiver needs to recover frame timings and frame numbers, the receiver may obtain a type of a current received frame in accordance with the frame-type control word. The receiver may recover the frame timing information in accordance with the frame timing validity indication bit. The receiver may recover information on the frame timing and frame number for every C1-th frame to be transmitted in accordance with the frame-number control word for every common multiple period, and obtain information on frame timings and frame numbers of other frames through symbol counting, that is, the information on frame timings and frame numbers of other frames may be determined in accordance with the number of symbol periods in a radio frame to be transmitted. Supposing there are 100 symbol periods in a radio frame to be transmitted, the receiver which obtains the frame timing and frame number for every C1-th frame to be transmitted may count from the start of the C1 frame timings and frame numbers to the 100^{th} symbol period, which is the start of frame timings of a next frame to be transmitted, with the radio frame number incremented by 1.

Indeed, the first embodiment of the invention shall not be limited to a specific RAT of common radio interface, but applicable to a uniform transmission for various existing RATs of radio frame to be transmitted, that is, a common radio interface may be enabled, although a primary application of the invention is directed to extending a CPRI REC-RE interface in such a way that the CPRI REC-RE interface may be adapted to a situation where different RATs developed for mobile communications exist concurrently.

Furthermore, implementations based on a CPRI REC-RE interface, such as division of control fields, allocation of control words and the like, may be proposed based upon the first embodiment of the invention. As mentioned above, CPRI V2.0 enables WCDMA radio frames to be transmitted in a period of 10ms. In the embodiment of the invention, a common frame configured with a frame length of 10 ms includes 150 hyper frames, each hyper frame includes 256 basic frames, and each basic frame includes a control word, which may be of 8, 16 or 32 bits dependent upon a line rate, and only 8 bits of which are used actually. The 256 basic frames in a hyper frame may be divided into 64 sub-channels (Ns), and each sub-channel includes control words from four basic frames (Xs), where each of Comma and HFN occupies one byte (8 bits), BFN occupies two bytes. The Comma is used for frame synchronization, the HFN is used for indication of a frame number of a current hyper frame, and the BFN is used for indication of a frame number of a borne radio frame for a WCDMA Node B.

In a second embodiment of the invention, based upon the structure of a CPRI common frame, EFNs may be configured in respective hyper frames and combined into EFN CB including frame-type control words, frame-timing validity indication bits and frame-number control words. For a plurality of RATs, configured in the EFN CB may be RAT-number control words indicative of a total number of different RATs of the frames to be transmitted, and RAT descriptors the number of which corresponds to the number of the RATs, wherein an RAT descriptor field contains correspondingly a frame-type control word, a frame-timing validity indication bit and a frame-number control word. In accordance with the descriptive information in the EFN CB on different RATs of the frames to be transmitted, the receiver may properly recover information on radio frames to be transmitted, frame timings and frame numbers for the purpose of frame synchronization.

An 8-bit control word, i.e. the EFN control word, may be allocated from the CPRI control words for transmission of radio frame timings and radio frame numbers of different RATs. This 8-bit control word may be any one Ns.Xs 8-bit control word among the CPRI control words, where Ns is a sub-channel number ranging from 3 to p-1, and Xs is a serial number of a control word in a sub-channel and ranges from 0 to 3. Since first three sub-channels with Ns ranging from 0 to 2 have been allocated in the CPRI standard, Ns may only take a value ranging from 3 to p-1.

As illustrated in Fig.4, there are 150 hyper frames in a 10-ms period, and each hyper frame includes an 8-bit EFN. Thus, there are 1200 bits in total for the EFN CB. The EFN CB in each 10-ms period may be logically regarded as consecutive bits for transmission of radio frame timings and radio frame numbers for different RATs. Naturally, an actual transmission is not continuous via an REC-RE interface. The EFN CB in each 10-ms period may be thus used for transmission of radio frame timings and radio frame numbers for different RATs.

A specific implementation will be described as the following. The EFN CB in each 10-ms period is divided into a plurality of fields, each including an RAT-number control word and a plurality of RAT descriptors. Here, the RAT-number control word is arranged at the first 8 bits, and the number of RATs shall be below or equal to 13, otherwise the 1200 bits for the EFN CB in this embodiment will be insufficient. Subsequently arranged are the RAT descriptors for all RATs, each of which occupies 88 bits and sequentially corresponds to respective RATs of frames to be transmitted. Each RAT descriptor sequentially includes: an 8-bit frame-type control word, which indicates a corresponding RAT type, i.e., the number of a frame type, wherein the indication of the number needs to be appointed in advance, for example, a number of 0 for the RAT type of a 10-ms frame for WCDMA, a number of 1 for the RAT type of a 60/13-ms frame for GSM, a number of 2 for the RAT type of a 2-ms frame for a certain RAT, and so on; then a 1-bit frame-timing validity indication bit, which indicates, when set, that the current common frame is the first common frame of a common multiple period, i.e., the start point of the current common frame coincides with the start point of the frame to be transmitted; then a 63-bit frame-number control word, indicating the real frame number of frame to be transmitted, which is incremented by C1 every common multiple period; and finally a 16-bit CRC field for the previous 72 bits of the current frame type descriptor.

**Table 1: An Example of Division of EFN CB**

| Location | Name and Description | Number of Bits |
|---|---|---|
| 0~7 | RAT-Number Control Word: RAT number N for timings and numbers of radio frames transmitted via radio interface | 8 |
| 8~95 | Frame-Type Control Word: number to which RAT Type 1 corresponds | 8 |
| | Frame-Timing-Validity Indication Bit: indicative of whether radio frame number and timing information for RAT Type 1 is valid or not ("1" indicates *valid,* and "0" indicates *invalid)* | 1 |
| | Frame-Number Control Word: radio frame number for RAT Type 1 | 63 |
| | CRC Field: CRC for the previous 72 bits | 16 |
| 96~183 | Frame-Type Control Word: number to which RAT Type 2 corresponds | 8 |
| | Frame-Timing-Validity Indication Bit: indicative of whether radio frame number and timing information for RAT Type 2 is valid or not ("1" indicates *valid,* and "0" indicates *invalid*) | 1 |
| | Frame-Number Control Word: radio frame number for RAT Type 2 | 63 |
| | CRC Field: CRC check for the previous 72 bits | 16 |
| ... ... | ... ... | |
| | ... ... | |
| | ... ... | |
| | ... ... | |
| 8+(N-1)*88 ~ 8+N*88-1 | Frame-Type Control Word: number to which RAT Type N corresponds | 8 |
| | Frame-Timing-Validity Indication Bit: indicative of whether radio frame number and timing information for RAT Type N is valid or not ("1" indicates *valid,* and "0" indicates *invalid*) | 1 |
| | Frame-Number Control Word: radio frame number for RAT Type N | 63 |
| | CRC: CRC check for the previous 72 bits | 16 |
| ... ... | | |

Table 1 is merely an example of division of the EFN CB, and in a specific implementation, the number of bits for any of the fields may be different from those in Table 1. The fields of "Frame-Type Control Word", "Frame-Timing-Validity Indication Bit" and "Frame-Number Control Word" are necessary, but the "CRC" field may be omitted. The "CRC" field may be used for an RE to judge whether received information is correct or not. The "RAT-Number Control Word" field may be used to determine a maximum number of RATs in the EFN CB, which needs to be judged by the RE.

With the field division as illustrated in Table 1, radio frame timings and radio frame numbers for up to 13 RATs may be transmitted simultaneously through an REC-RE interface link.

Supposing a frame period for a certain RAT is P ms, and P and 10 have a common multiple X, X/P=C1, and X/10=C2. In this case, radio frame timings and radio frame numbers for this RAT may be transmitted as the following.

(1) An RAT type number is allocated in advance to the RAT, and locations of information on radio frame timings and radio frame numbers for the RAT are determined in the EFN CB.

(2) Starting from a 10-ms period at the REC, relevant information is filled at such locations in the EFN CB that correspond to the RAT: the RTA number is filled in the "Frame-Type Control Word" field; "1" indicative of valid frame timing and number information is filled in the "Frame-Timing-Validity Indication Bit" field; a starting frame number n0 for the RAT, generally 0, is filled in the "Frame-Number Control Word" field; and a CRC calculation result for data filled in the previous three fields is filled in the "CRC" field. Here, the 10-ms period may be a starting 10-ms period (BFN=0) common to transmission of radio frame timings and radio frame numbers for all RATs after initialization of the REC. Naturally, embodiments of the invention shall not be limited to this, and in a specific implementation, transmission of information on radio frame timings and radio frame numbers for a certain RAT may be initiated at any 10-ms period.

(3) In the case that C2 equals to 1, relevant information is filled at such locations corresponding to the RAT in the EFN CB of a next 10-ms period: the number of the RAT is filled in the "Frame-Type Control Word" field; "1" indicative of *valid* is filled in the "Frame-Timing-Validity Indication Bit" field; a starting frame number n0+C1 for the RAT is filled in the "Frame-Number Control Word" field; and a CRC calculation result for data filled in the previous three fields is filled in the "CRC" field. In the case that C2 does not equals to 1, relevant information is filled at locations corresponding to the RAT in the EFN CB of subsequent 10-ms periods, the total number of which is C2-1: the RAT number is filled in the "Frame-Type Control Word" field; "0" indicative of *invalid* is filled in the "Frame-Timing Validity Indication Bit" field; a starting frame number n0 for the RAT is filled in the "Frame-Number Control Word" field; and a CRC calculation result for data filled in the previous three fields is filled in the "CRC" field.

(4) Methods for filling in the subsequent EFN CB are similar to that described with reference to step (3), wherein "1" indicative of *valid* is filled in the "Frame-Timing Validity Indication Bit" field of the EFN CB only for every C2-th 10-ms frame, and the value of the "Frame-Type Control Word" field is incremented by C1 (if a maximum value of frame number is exceeded, incremented from the lower end of frame number while keeping the logical frame number difference be C1); while "0" indicative of *invalid* is filled in each of the "Frame-Timing Validity Indication Bit" fields of the EFN CB of other 10-ms frames, and contents of the "Frame-Number Control Word" fields may be left unchanged.

Table 2 illustrates specific values filled in the fields relevant to the EFN CB by an example of transmission for three RATs (including WCDMA, GSM and an RAT of a 2-ms period) via an REC-RE interface.

| Common Frame No. (10-ms frame length) | Frame No. for RAT 1 (WCDMA) | | Frame No. for RAT 2 (GSM) | | Frame No. for RAT 3 (2-ms frame length) | |
|---|---|---|---|---|---|---|
| | Validity Indication | Frame No. | Validity Indication | Frame No. | Validity Indication | Frame No. |
| 0 | 1 | 0 | 1 | 0 | 1 | 0 |
| 1 | 1 | 1 | 0 | - | 1 | 5 |
| 2 | 1 | 2 | 0 | - | 1 | 10 |
| ... | ... | ... | ... | ... | ... | ... |
| 6 | 1 | 6 | 1 | 13 | 1 | 30 |
| ... | ... | ... | ... | ... | ... | ... |

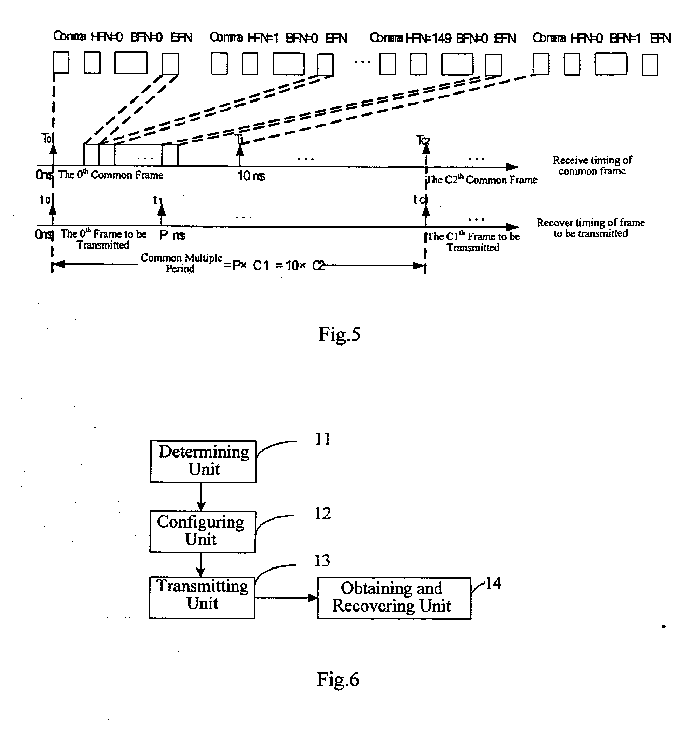

At the receiver, the RE may obtain, from the Comma, the HFN and the EFN CB, a frame starting time for every C1-th radio frame, and a radio frame number corresponding to the frame starting time, for a corresponding RAT. Figure 5 is a schematic diagram of a method for the RE to extract frame synchronization information and frame number information upon receipt. For instance, the information on frame timings and frame numbers of each common multiple period may be obtained at time T0/t0 and TC2/tC1. Then the RE recovers starting times (t1, t2 ...... tC1-1, etc.) of other radio frame periods, the number of which is C1-1, evenly for every C1 radio frame periods. Among methods for this recovering, a simple one is by counting symbol clocks, chip clocks, etc. for an RAT at the RE. In the case of GSM for example, in which C1 equals to 13, and there are 1250 symbol clock periods in a GSM radio frame, then a counter may be set to 0 at time t0, and each time the counter counts to 1250, it means a start of a new radio frame and the frame number may be incremented by 1.

The method for transmitting radio frame timings and frame numbers for an RAT through the EFN CB has been described above. By example of Table 1, the method may be applied to transmit radio frame timings and radio frame numbers for up to 13 RATs over an REC-RE interface link. Transmission of radio frame timings and radio frame numbers may be enabled independently for different RATs, or be associated among the RATs where desired.

Fig.6 illustrates a schematic structure diagram of a device for transmitting and a device for receiving frame timings and frame numbers via a common radio interface according to an embodiment of the invention, the device for transmitting includes a determining unit 11, a configuring unit 12 and a transmitting unit 13, and the device for receiving includes an obtaining and recovering unit 14. With the use of a common multiple relationship between a length of frame to be transmitted and a length of common frame, the determining unit 11 determines a common multiple period for frame to be transmitted, so that there are exactly C1 frames to be transmitted, where C1 is an integer, or C2 common frames, where C2 is an integer, in the common multiple period for frame to be transmitted. The configuring unit 12, coupled with the determining unit 11, configures, in each common multiple period for frame to be transmitted, C1 frames to be transmitted borne in C2 consecutive common frames for transmission. The transmitting unit 13, coupled with the configuring unit 12, transmits validity information on frame timings and frame numbers in a first common frame of each common multiple period. The obtaining and recovering unit 14, coupled with the transmitting unit 13, obtains a type of a current received frame from a received frame-type control field, recovers information on frame timings from a frame-timing validity indication bit for every common multiple period; and recovers information on frame timing and frame number for every C1-th received frame from a frame-number control word for every common multiple period, and obtains information on frame timings and frame numbers of other received frames through symbol counting.

According to the embodiment, frame-type control words, frame-timing validity indication bits, frame-number control words and/or Cyclic Redundancy Check (CRC) words for different RATs of the frames to be transmitted may be configured in a common frame. A frame-type control word indicates a type of a current frame to be transmitted. A frame-timing validity indication bit is set in a first common frame of each common multiple period so as to indicate whether information on frame timings and frame numbers of the common frame is valid or not. Information on frame number of frame to be transmitted is filled in a first common frame of each common multiple period, and the frame number is incremented by C1 every common multiple period. A CRC word checks correctness of an RAT descriptor.

The common frame for the device includes hyper frames, and each hyper frame includes basic frames, and includes a comma control word for frame synchronization, a hyper-frame-number control word for indication of a frame number of a current hyper frame, a Node B frame number for indication of a frame number of a borne radio frame for a Node B, and an extension-frame-number control word. Extension-frame-number control words for all hyper frames in a common frame are combined into extension frame number combination bits. This field includes frame-type control words, frame-timing validity indication bits and frame-number control words, and further includes RAT-number control words for indication of the number of different RATs of the frames to be transmitted, wherein the number of the RATs corresponds to the number of RAT descriptors for the RATs, which include the frame-type control words, the frame-timing validity indication bits and the frame-number control words for the RATs.

That is, the extension frame number combination bits from different CPRI hype frames are used for differentiating among a plurality of RATs. The control words within the extension frame number combination bits are used for indication of types of radio frame RATs with different frame lengths. Frame timing information transmitted in a Sync byte, a hyper-frame-number control word and the like may be used to recover at an opposite end the information on radio frame timings and frame numbers through a corresponding method. In a specific CPRI implementation, each hyper frame includes an extension-frame-number byte, and all extension frame numbers in a common frame including 150 hyper frames are combined into a control field, which in turn is divided into RAT descriptors of radio frames for different RATs, describing respectively information such as a frame type, a frame-timing validity indication, a frame number, etc.

The units in the devices according to the embodiment of the invention function and operate as described above in connection with the inventive methods, and will not be described here.

Practically, the embodiments of the invention can transmit radio frame timings and radio frame numbers for another RAT or a plurality of RATs via a CPRI, and also extend applications of the CPRI to one or more other RATs or later versions such as WCDMA R7 or the like. Thus, a solution may be provided for transmitting information on radio frame timings and frame numbers for different RATs via a common radio interface. Particularly, the transmissions may be combined based upon a common multiple relationship between a radio frame length and a CPRI frame length so as to enable uniform bearing of different RATs with different frame lengths, thus ensuring a high efficiency of the uniform transmission for the RATs and saving bandwidth resources of an interface. In addition, in the solutions of the embodiments of the invention, fixed control words for extension frame number are allocated in the CPRI basic frames, and are combined to describe the control on the transmission of different radio frames, thereby improving compatibility of the CPRI and hence of radio communication devices.

As appreciated by those skilled in the art, the description of the technical particulars in the above embodiments has been presented in certain contexts of application, in which specific configuration of parameters or the like has been provided. However, in order to attain the objects of the invention, the parameters may be configured flexibly as required in a practical application without departing from the essence and scope of the invention.

## Claims

1. A method for transmitting frame timings and frame numbers via a common radio interface, comprising:
determining, in accordance with a common multiple relationship between a length of common frame and a length of frame to be transmitted, a common multiple period so as to be equal to an integer C2 times the length of common frame and to an integer C1 times the length of frame to be transmitted (S11); and
bearing C1 frames to be transmitted in C2 consecutive common frames for transmission in each common multiple period (S12),
**characterized by** further comprising:
transmitting valid information on frame timings and frame numbers of the frames to be transmitted in a first common frame of each common multiple period (S13).

2. The method according to claim 1, wherein in accordance with a least common multiple relationship between the length of common frame and the length of frame to be transmitted, the common multiple period is determined to be equal to a least common multiple of the length of common frame and the length of frame to be transmitted.

3. The method according to claim 2, wherein in the case of a plurality of different frames to be transmitted, a frame-type control word is configured in each of the common frames so as to indicate a type of a current frame to be transmitted.

4. The method according to claim 2, wherein a frame-timing validity indication bit is configured in each of the common frames, and is set in a first common frame of each common multiple period so as to indicate information on frame timings and frame numbers of the common frames is valid.

5. The method according to claim 2, wherein a frame-number control word is configured in each of the common frames, information on a frame number of frame to be transmitted is filled in a first common frame of each common multiple period, and the frame number of frame to be transmitted is incremented by C1 every common multiple period.

6. The method according to claim 1, 2, 3, 4 or 5, wherein the common radio interface is a common public radio interface, each of the common frames comprises hyper frames in which a comma control word is configured for frame synchronization, a hyper-frame-number control word is configured for indication of a frame number of a current hyper frame, and a Node B frame number is configured for indication of a frame number of a borne radio frame for a Node B.

7. The method according to claim 6, wherein an extension-frame-number control word is configured in each of the hyper frames, the extension-frame-number control words of all the hyper frames in each of the common frames are combined into extension frame number combination bits comprising frame-type control words, frame-timing validity indication bits and frame-number control words.

8. The method according to claim 7, wherein the extension frame number combination bits further comprise:
Radio Access Technology (RAT)-number control words which indicate the number of different RATs of the frames to be transmitted, wherein the number of the RATs corresponds to RAT descriptors for the RATs, which comprise the frame-type control words, the frame-timing validity indication bits and the frame-number control words for the RATs.

9. The method according to claim 8, wherein the RAT descriptors further comprise check words for checking correctness of the frame-type control words, the frame-timing validity indication bits and the frame-number control words.

10. The method according to claim 6, wherein the RATs comprise one or more of the following RATs:
Wideband Code Division Multiple Address, Code Division Multiple Address 2000, Time Division-Synchronous Code Division Multiple Access, Global System of Mobile Communication, and 802.16e of the Institute of Electrical and Electronic Engineers.

11. A method for receiving frame timings and frame numbers via a common radio interface, **characterized by** comprising:
obtaining a type of a current received frame in accordance with a frame-type control word;
recovering information on frame timings in accordance with a frame-timing validity indication bit for every common multiple period equal to an integer C2 times a length of common frame and to an integer C1 times a length of the current received frame; and
recovering information on frame timing and frame number for every C1-th received frame in accordance with a frame-number control word for every common multiple period, and obtaining information on frame timings and frame numbers of other received frames through symbol counting.

12. A device for transmitting frame timings and frame numbers via a common radio interface, comprising:
a determining unit (11) adapted to determine a common multiple period for frame to be transmitted with the use of a common multiple relationship between a length of frame to be transmitted and a length of common frame, so that there are exactly C1 frames to be transmitted, where C1 is an integer, or C2 common frames, where C2 is an integer, in a common multiple period for frame to be transmitted; and
a configuring unit (12) coupled with the determining unit and adapted to configure, in each common multiple period for frame to be transmitted, C1 frames to be transmitted borne in C2 consecutive common frames for transmission,
**characterized by** further comprising:
a transmitting unit (13) coupled with the configuring unit and adapted to transmit valid information on frame timings and frame numbers of the frames to be transmitted in a first common frame of each common multiple period.

13. A device for receiving frame timings and frame numbers via a common radio interface, **characterized by** comprising:
an obtaining and recovering unit (14) adapted to obtain a type of a current received frame from a received frame-type control field, to recover information on frame timings from an frame-timing validity indication bit for every common multiple period equal to an integer C2 times a length of common frame and to an integer C1 times a length of the current received frame, to recover information on frame timing and frame number for every C1-th received frame from a frame-number control word for every common multiple period, and to obtain information on frame timings and frame numbers of other received frames through symbol counting.

## Patentansprüche

1. Verfahren zum Übertragen von Rahmenzeiten und Rahmenzahlen über eine allgemeine Funkschnittstelle, aufweisend:
Ermitteln, in Übereinstimmung mit einer allgemeinen Mehrfach-Beziehung zwischen einer Länge eines allgemeinen Rahmens und einer Länge eines zu übertragenden Rahmens, einer allgemeinen Mehrfach-Zeitdauer derart, dass sie gleich einer Ganzzahl C2 multipliziert mit der Länge des allgemeinen Rahmens und einer Ganzzahl C1 multipliziert mit der Länge des zu übertragenden Rahmens ist (S11); und
Erzeugen von C1 zu übertragenden Rahmen in C2 aufeinanderfolgenden allgemeinen Rahmen zur Übertragung in jede allgemeine Mehrfach-Zeitdauer (S12); **gekennzeichnet durch** außerdem aufweisend:
Übertragen von Gültig-Information über Rahmenzeiten und Rahmenzahlen der zu übertragenden Rahmen in einem ersten allgemeinen Rahmen einer jeden allgemeinen Mehrfach-Zeitdauer (S13).

2. Verfahren gemäß Anspruch 1, wobei in Übereinstimmung mit mindestens einer allgemeinen Mehrfach-Beziehung zwischen der Länge des allgemeinen Rahmens und der Länge des zu übertragenden Rahmens die allgemeine Mehrfach-Zeitdauer als gleich mit mindestens einem allgemeinen Mehrfachen der Länge des allgemeinen Rahmens und der Länge des zu übertragenden Rahmens ermittelt wird.

3. Verfahren gemäß Anspruch 2, wobei im Fall einer Mehrzahl von unterschiedlichen zu übertragenden Rahmen ein Rahmen-artiges Steuerwort in jedem der allgemeinen Rahmen derart konfiguriert wird, dass es einen Typ eines gegenwärtig zu übertragenden Rahmens anzeigt.

4. Verfahren gemäß Anspruch 2, wobei in jedem der allgemeinen Rahmen ein Rahmenzeit-Gültigkeits-Anzeige-Bit konfiguriert wird und in einem ersten allgemeinen Rahmen einer jeden allgemeinen Mehrfach-Zeitdauer derart festgelegt wird, dass es anzeigt, dass Information über Rahmenzeiten und Rahmenzahlen der allgemeinen Rahmen gültig ist.

5. Verfahren gemäß Anspruch 2, wobei ein Rahmenzahl-Steuerwort in jedem der allgemeinen Rahmen konfiguriert wird, Information über eine Rahmenzahl des zu übertragenden Rahmens in einen ersten allgemeinen Rahmen einer jeden allgemeinen Mehrfach-Zeitdauer eingefüllt wird, und die Rahmenzahl des zu übertragenden Rahmens bei jeder allgemeinen Mehrfach-Zeitdauer um C1 erhöht wird.

6. Verfahren gemäß Anspruch 1, 2, 3, 4 oder 5, wobei die allgemeine Funkschnittstelle eine allgemeine öffentliche Funkschnittstelle ist, jeder der allgemeinen Rahmen Hyperrahmen aufweist, in welchen ein Komma-Steuerwort für Rahmen-Synchronisation konfiguriert wird, ein Hyper-Rahmenzahl-Steuerwort zur Anzeige einer Rahmenzahl eines gegenwärtigen Hyperrahmens konfiguriert wird und eine Knoten-B-Rahmenzahl zur Anzeige einer Rahmenzahl eines geborenen Funkrahmens für einen Knoten B konfiguriert wird.

7. Verfahren gemäß Anspruch 6, wobei in jedem der Hyperrahmen ein Ausdehnungs-Rahmenzahl-Steuerwort konfiguriert wird, die Ausdehnungs-Rahmenzahl-Steuerworte aller Hyperrahmen in jedem der allgemeinen Rahmen in Ausdehnungs-Rahmenzahl-Kombinations-Bits, Rahmenzeit-Gültigkeits-Anzeige-Bits und Rahmenzahl-Steuerworte kombiniert werden.

8. Verfahren gemäß Anspruch 7, wobei die Ausdehnungs-Rahmenzahl-Kombinations-Bits außerdem aufweisen:
Funk-Zugriffs-Technologie (RAT)-Zahl-Steuerworte, die die Anzahl an verschiedenen RATs der zu übertragenden Rahmen anzeigen, wobei die Zahl der RATs RAT-Deskriptoren für die RATs entsprechen, die für die RATs die Rahmen-Typ-Steuerworte, die Rahmenzeit-Gültigkeits-Anzeige-Bits und die Rahmenzahl-Steuerworte aufweisen.

9. Verfahren gemäß Anspruch 8, wobei die RAT-Deskriptoren außerdem Kontrollworte zum Überprüfen der Richtigkeit der Rahmen-Typ-Steuerworte, der Rahmenzeit-Gültigkeits-Anzeige-Bits und der Rahmenzahl-Steuerworte aufweisen.

10. Verfahren gemäß Anspruch 6, wobei die RATs eine oder mehr der folgenden RATs aufweisen:
Breitband-Codemultiplex-Mehrfachadresse, Codemultiplex-Mehrfachadresse 2000, Zeitmultiplex-Synchron-Codemultiplex-Mehrfachadresse, globales System für mobile Kommunikation und 802.16e des Instituts für Electrical and Electronic Engineers.

11. Verfahren zum Empfangen von Rahmenzeiten und Rahmenzahlen über eine allgemeine Funkschnittstelle, **gekennzeichnet durch** aufweisend:
Erhalten eines Typs eines gegenwärtig empfangenen Rahmens in Übereinstimmung mit einem Rahmen-Typ-Steuerwort;
Wiedererlangen von Information über Rahmenzeiten in Übereinstimmung mit einem Rahmenzeit-Gültigkeits-Anzeige-Bit für jede allgemeine Mehrfach-Zeitdauer gleich einer Ganzzahl C2 multipliziert mit einer Länge eines allgemeinen Rahmens und einer Ganzzahl C1 multipliziert mit einer Länge des gegenwärtig empfangenen Rahmens; und
Wiedererlangen von Information über Rahmenzeit und Rahmenzahl für jeden C1-ten empfangenen Rahmen in Übereinstimmung mit einem Rahmenzahl-Steuerwort für jede allgemeine Mehrfach-Zeitdauer und Erhalten von Information über Rahmenzeiten und Rahmenzahlen von anderen empfangenen Rahmen **durch** Zeichenzählen.

12. Vorrichtung zum Übertragen von Rahmenzeiten und Rahmenzahlen über eine allgemeine Funkschnittstelle, aufweisend:
eine Ermittlungs-Einheit (11) eingerichtet zum Ermitteln einer allgemeinen Mehrfach-Zeitdauer für zu übertragende Rahmen unter der Verwendung einer allgemeinen Mehrfach-Beziehung zwischen einer Länge eines zu übertragenden Rahmens und einer Länge eines allgemeinen Rahmens derart, dass es in einer allgemeinen Mehrfach-Zeitdauer für zu übertragende Rahmen exakt C1 zu übertragende Rahmen, wobei C1 eine Ganzzahl ist, oder C2 allgemeine Rahmen, wobei C2 eine Ganzzahl ist, gibt; und
eine Konfigurations-Einheit (12) gekoppelt mit der Ermittlungs-Einheit und eingerichtet zum Konfigurieren von C1 zu übertragenden Rahmen in jeder allgemeinen Mehrfach-Zeitdauer für zu übertragende Rahmen, wobei die C1 zu übertragenden Rahmen in C2 aufeinanderfolgenden allgemeinen Rahmen zur Übertragung erzeugt wurden;
**gekennzeichnet durch** außerdem aufweisend:
eine Übertragungs-Einheit (13) gekoppelt mit der Konfigurations-Einheit und eingerichtet zum Übertragen von Gültig-Information über Rahmenzeiten und Rahmenzahlen der zu übertragenden Rahmen in einem ersten allgemeinen Rahmen einer jeden allgemeinen Mehrfach-Zeitdauer.

13. Vorrichtung zum Empfangen von Rahmenzeiten und Rahmenzahlen über eine allgemeine Funkschnittstelle, **gekennzeichnet durch** aufweisend:
eine Erhalten- und Wiedererlangen-Einheit (14) eingerichtet zum Erhalten eines Typs eines gegenwärtig empfangenen Rahmens von einem empfangenen Rahmen-Typ-Steuerfeld, zum Wiedererlangen von Information über Rahmenzeiten von einem Rahmenzeit-Gültigkeits-Anzeige-Bit für jede allgemeine Mehrfach-Zeitdauer gleich einer Ganzzahl C2 multipliziert mit einer Länge eines allgemeinen Rahmens und einer Ganzzahl C1 multipliziert mit einer Länge des gegenwärtig empfangenen Rahmens, zum Wiedererlangen von Information über Rahmenzeit und Rahmenzahl für jeden C1-ten empfangenen Rahmen von einem Rahmenzahl-Steuerwort für jede allgemeine Mehrfach-Zeitdauer und zum Erhalten von Information über Rahmenzeiten und Rahmenzahlen von anderen empfangenen Rahmen **durch** Zeichenzählen.

## Revendications

1. Procédé de transmission de synchronisations de trames et de nombres de trames par l'intermédiaire d'une interface radio commune, comprenant les étapes consistant à :
déterminer, selon une relation de multiple commun entre une longueur de trame commune et une longueur de trame à transmettre, une période multiple commune de manière à être égale à un nombre entier de fois C2 la longueur de la trame commune et à un nombre entier de fois C1 la longueur de la trame à transmettre (S11) ; et
acheminer C1 trames à transmettre dans C2 trames communes consécutives pour une transmission au cours de chaque période multiple commune (S12),
**caractérisé par le fait qu'**il comprend l'étape supplémentaire consistant à :
transmettre des informations valides sur les synchronisations de trames et les nombres de trames des trames à transmettre dans une première trame commune de chaque période multiple commune (S13).

2. Procédé selon la revendication 1, dans lequel selon une relation de plus petit commun multiple entre la longueur de la trame commune et la longueur de la trame à transmettre, la période multiple commune est déterminée de manière à être égale au plus petit commun multiple de la longueur de la trame commune et de la longueur de la trame à transmettre.

3. Procédé selon la revendication 2, dans lequel dans le cas d'une pluralité de trames différentes à transmettre, un mot de contrôle de type de trame est configuré dans chacune des trames communes de manière à indiquer le type de trame courante à transmettre.

4. Procédé selon la revendication 2, dans lequel un bit d'indication de validité de synchronisation de trame est configuré dans chacune des trames communes, et est placé dans une première trame commune de chaque période multiple commune de manière à indiquer que les informations sur les synchronisations de trames et les nombres de trames des trames communes, sont valides.

5. Procédé selon la revendication 2, dans lequel un mot de contrôle de nombres de trames est configuré dans chacune des trames communes, les informations sur un nombre de trames des trames à transmettre sont insérées dans une première trame commune de chaque période multiple commune, et le nombre de trames des trames à transmettre est incrémenté de C1 à chaque période multiple commune.

6. Procédé selon l'une quelconque des revendications 1, 2, 3, 4 ou 5, dans lequel l'interface radio commune est une interface radio publique commune, chacune des trames communes comprend des hyper-trames dans lesquelles un mot de contrôle de virgule est configuré pour une synchronisation de trame, un mot de contrôle de nombre d'hyper-trames est configuré pour une indication d'un nombre de trames d'une hyper-trame courante, et un nombre de trames de noeud B est configuré pour une indication d'un nombre de trames d'une trame radio acheminée pour un noeud B.

7. Procédé selon la revendication 6, dans lequel un mot de contrôle de nombres de trames d'extension est configuré dans chacune des hyper-trames, les mots de contrôle de nombres de trames d'extension de toutes les hyper-trames dans chacune des trames communes sont combinés dans des bits de combinaison de nombres de trames d'extension comprenant les mots de contrôle de types de trames, des bits d'indication de validité de synchronisation de trames et des mots de contrôle de nombres de trames.

8. Procédé selon la revendication 7, dans lequel les bits de combinaison de nombres de trames d'extension comprennent en outre :
des mots de contrôle de nombres de technologie d'accès radio (ou RAT, acronyme de Radio Access Technology), qui indiquent le nombre de RAT différentes de trames à transmettre, dans lequel le nombre de RAT correspond à des descripteurs de RAT des RAT, qui comprennent les mots de contrôle de types de trames, les bits d'indication de validité de synchronisation de trames et les mots de contrôle de nombres de trames des RAT.

9. Procédé selon la revendication 8, dans lequel les descripteurs de RAT comprennent en outre des mots de contrôle pour contrôler l'exactitude des mots de contrôle de types de trames, les bits d'indication de validité de synchronisation de trames et les mots de contrôle de nombres de trames.

10. Procédé selon la revendication 6, dans lequel les RAT comprennent une ou plusieurs des RAT suivantes :
adresse multiple par répartition de code à large bande, adresse multiple par répartition de code 2000, accès multiple par répartition de code synchrone - par répartition dans le temps, système mondial de communication avec les mobiles, et 802.16e de l'IEEE (Institute of Electrical and Electronic Engineers).

11. Procédé de réception de synchronisations de trames et de nombres de trames par l'intermédiaire d'une interface radio classique, **caractérisé par le fait qu'**il comprend les étapes consistant à :
obtenir le type d'une trame reçue courante selon un mot de contrôle de type de trame ;
extraire des informations sur des synchronisations de trames selon un bit d'indication de validité de synchronisation de trame pour chaque période multiple commune égale à un nombre entier de fois C2 la longueur d'une trame commune et à un nombre entier de fois C1 la longueur d'une trame reçue courante ;
et
extraire les informations sur la synchronisation de trames et le nombre de trames de chaque C1^{ème} trame reçue selon un mot de contrôle de nombres de trames pour chaque période multiple commune, et obtenir les informations sur les synchronisations de trames et les nombres de trames des autres trames reçues par l'intermédiaire du comptage de symboles.

12. Dispositif de transmission de synchronisations de trames et de nombres de trames par l'intermédiaire d'une interface radio classique, comprenant :
une unité de détermination (11) apte à déterminer une période multiple commune de trame à transmettre grâce à l'utilisation d'une relation de commun multiple entre une longueur de trame à transmettre et une longueur de trame commune, de telle sorte qu'il y ait exactement C1 trames à transmettre, où C1 est un nombre entier, ou C2 trames communes, où C2 est un nombre entier, dans une période multiple commune de trame à transmettre ; et
une unité de configuration (12) reliée à l'unité de détermination et apte à configurer, dans chaque période multiple commune de trame à transmettre, C1 trames à transmettre acheminées dans C2 trames communes consécutives pour une transmission,
**caractérisé par le fait qu'**il comprend en outre :
une unité de transmission (13) reliée à l'unité de configuration et apte à transmettre des informations valides sur les synchronisations de trames et les nombres de trames de trames à transmettre dans une première trame commune de chaque période multiple commune.

13. Dispositif de réception de synchronisations de trames et de nombres de trames par l'intermédiaire d'une interface radio classique, **caractérisé par le fait qu'**il comprend :
une unité d'obtention et d'extraction (14) apte à obtenir le type d'une trame reçue courante à partir d'un champ de contrôle de type de trame reçue, de manière à extraire des informations sur des synchronisations de trames à partir d'un bit d'indication de validité de synchronisation de trame pour chaque période multiple commune égale à un nombre entier de fois C2 la longueur de la trame commune et à un nombre entier de fois C1 la longueur de la trame reçue courante, de manière à extraire des informations sur les synchronisations de trames et le nombre de trames de chaque C1^{ème} trame reçue à partir d'un mot de contrôle de nombre de trames pour chaque période multiple commune, et obtenir des informations sur des synchronisations de trames et des nombres de trames d'autres trames reçues par l'intermédiaire du comptage de symboles.
